Europäisches Patentamt

European Patent Office

Office européen des brevets

(19)

(11) **EP 1 071 038 A1**

(12) # DEMANDE DE BREVET EUROPEEN

(43) Date de publication:
**24.01.2001 Bulletin 2001/04**

(51) Int Cl.$^7$: **G06K 19/07**

(21) Numéro de dépôt: **00410077.2**

(22) Date de dépôt: **17.07.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **20.07.1999 FR 9909564**

(71) Demandeur: **STMicroelectronics SA**
**94250 Gentilly (FR)**

(72) Inventeurs:
• **Wuidart, Luc**
**83910 Pourrières (FR)**
• **Enguent, Jean-Pierre**
**13119 Saint-Savournin (FR)**

(74) Mandataire: **de Beaumont, Michel**
**Cabinet Michel de Beaumont**
**1, rue Champollion**
**38000 Grenoble (FR)**

(54) **Dimensionnement d'un système à transpondeur électromagnétique pour un fonctionnement dédié en couplage lointain**

(57) L'invention concerne un système de transmission électromagnétique sans contact entre une borne comprenant un circuit oscillant série de génération d'un champ électromagnétique et un transpondeur comprenant un circuit oscillant parallèle (L2, C2), ces circuits oscillants étant dimensionnés pour que le coefficient (k) de couplage entre eux diminue fortement quand la distance (d) séparant le transpondeur de la borne devient inférieure à une valeur prédéterminée.

Fig 2

EP 1 071 038 A1

# Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture et/ou d'écriture. L'invention concerne, plus particulièrement, des transpondeurs dépourvus d'alimentation autonome. Ces transpondeurs extraient l'alimentation nécessaire aux circuits électroniques qu'ils comportent du champ haute fréquence rayonné par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou de transpondeurs à lecture-écriture qui contiennent des données qui peuvent être modifiées par la borne.

Les systèmes utilisant des transpondeurs électromagnétiques sont basés sur l'emploi de circuits oscillants comprenant un enroulement formant antenne, côté transpondeur et côté borne de lecture-écriture. Ces circuits sont destinés à être couplés par champ magnétique proche lorsque le transpondeur entre dans le champ de la borne de lecture-écriture.

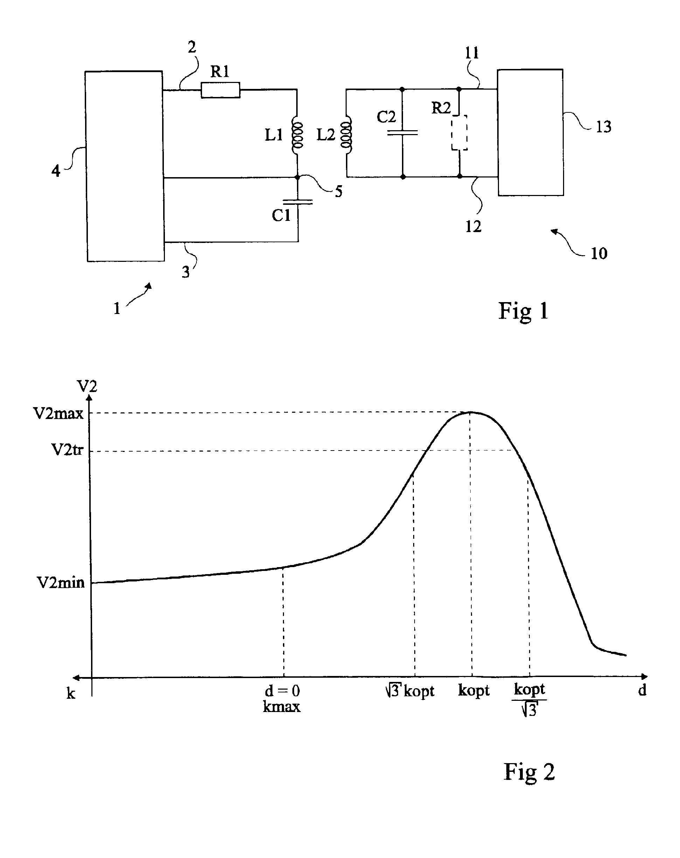

La figure 1 représente, de façon très schématique et simplifiée, un exemple classique de système d'échange de données entre une borne 1 de lecture-écriture et un transpondeur 10.

Généralement, la borne 1 est essentiellement constituée d'un circuit oscillant série, formé d'une inductance L1, en série avec un condensateur C1 et une résistance R1, entre une borne 2 de sortie d'un amplificateur ou coupleur d'antenne (non représenté) et une borne 3 de référence (généralement, la masse). Le coupleur d'antenne fait partie d'un circuit 4 de commande du circuit oscillant et d'exploitation des données reçues comprenant, entre autres, un modulateur-démodulateur et un microprocesseur de traitement des commandes et des données. Dans l'exemple représenté à la figure 1, le point 5 de connexion du condensateur C1 et de l'inductance L1 constitue une borne de prélèvement d'un signal de données reçu du transpondeur 10 à destination du démodulateur. Le circuit 4 de la borne communique généralement avec différents circuits d'entrée-sortie (clavier, écran, moyen de transmission vers un serveur, etc.) et/ou de traitement non représentés. Les circuits de la borne de lecture-écriture tirent l'énergie nécessaire à leur fonctionnement d'un circuit d'alimentation (non représenté) raccordé, par exemple, au réseau de distribution électrique.

Un transpondeur 10, destiné à coopérer avec une borne 1, comporte essentiellement un circuit oscillant parallèle formé d'une inductance L2, en parallèle avec un condensateur C2 entre deux bornes 11, 12 d'entrée d'un circuit 13 de commande et de traitement du transpondeur 10. Les bornes 11 et 12 sont, en pratique, reliées à l'entrée d'un moyen de redressement (non représenté) dont les sorties définissent des bornes d'alimentation continues des circuits internes au transpondeur. A la figure 1, la charge constituée par les circuits du transpondeur 10 sur le circuit oscillant a été modélisée par une résistance R2, représentée en pointillés, en parallèle avec l'inductance L2 et le condensateur C2.

Le circuit oscillant de la borne 1 est excité par un signal haute fréquence (par exemple, 13,56 MHz) destiné à être capté par un transpondeur 10. Quand le transpondeur 10 se trouve dans le champ de la borne 1, une tension haute fréquence est engendrée aux bornes 11, 12 du circuit résonnant du transpondeur. Cette tension, après redressement, est destinée à fournir la tension d'alimentation des circuits électroniques 13 du transpondeur. Ces circuits comprennent généralement, essentiellement, un microprocesseur, une mémoire, un démodulateur des signaux éventuellement reçus de la borne 1, et un modulateur pour transmettre des informations à la borne.

La transmission d'informations du transpondeur 10 vers la borne 1 s'effectue généralement en modifiant la charge du circuit oscillant L2, C2 de sorte que le transpondeur prélève une quantité d'énergie plus ou moins importante du champ magnétique haute fréquence. Cette variation est détectée, côté borne 1, dans la mesure où l'amplitude du signal d'excitation haute fréquence est maintenue constante. Par conséquent, une variation d'énergie du transpondeur se traduit par une variation d'amplitude et de phase du courant dans l'antenne L1. Cette variation est alors détectée, par exemple, par une mesure du signal de la borne 5, soit au moyen d'un démodulateur de phase, soit d'un démodulateur d'amplitude. La variation de charge côté transpondeur est généralement effectuée au moyen d'un interrupteur électronique de commande d'une résistance ou d'un condensateur modifiant la charge du circuit oscillant. L'interrupteur électronique est généralement commandé à une fréquence (par exemple, 847,5 kHz) dite sous-porteuse, nettement inférieure (généralement avec un rapport d'au moins 10) à la fréquence du signal d'excitation du circuit oscillant de la borne 1.

Dans le cas d'une démodulation de phase par la borne 1, son démodulateur détecte, dans les demi-périodes de la sous-porteuse où l'interrupteur électronique du transpondeur est fermé, un léger déphasage (quelques degrés, voire moins d'un degré) de la porteuse haute fréquence par rapport à un signal de référence. La sortie du démodulateur restitue alors un signal image du signal de commande de l'interrupteur électronique du transpondeur, qui peut être décodé pour restituer les données binaires transmises.

Pour obtenir un fonctionnement correct du système, les circuits oscillants de la borne 1 et du transpondeur 10 sont généralement accordés sur la fréquence de la porteuse, c'est-à-dire que leur fréquence de résonance est réglée sur la fréquence de, par exemple, 13,56 MHz. Cet accord a pour objet de maximiser le transfert d'énergie vers le transpondeur, généralement, une carte de format type carte de crédit intégrant les différents constituants du transpondeur.

Les domaines d'application des transpondeurs électromagnétiques (par exemple, le passage de péages autoroutiers, le comptage ou l'authentification de porteurs de transpondeurs) peuvent rendre souhaitable de garantir qu'un transpondeur ne fonctionne que dans une relation de distance prédéterminée avec une borne de lecture-écriture, plus précisément dans une relation lointaine, généralement définie par une distance, supérieure à 5 cm, séparant les antennes respectives du transpondeur et de la borne.

Par exemple, dans des applications telles que le passage de péage autoroutier où l'automobiliste est forcément relativement loin de la borne, il est indispensable de garantir la sécurité des transactions et d'empêcher que le signal de paiement ou d'authentification soit capté par une borne "pirate" placée plus près du transpondeur. Dans ce cas, on doit garantir que le transpondeur ne fonctionnera que dans une relation lointaine avec la borne.

Toujours à titre d'exemple, lorsqu'un transpondeur se trouve dans le champ de la borne, un autre transpondeur peut également se trouver dans ce champ. Les systèmes classiques privilégient alors le fonctionnement du transpondeur le plus proche de la borne. Dans certaines applications, on peut cependant souhaiter privilégier le fonctionnement du transpondeur le plus distant. Dans ce cas, les systèmes classiques n'apportent pas de solution acceptable.

En effet, un transpondeur qui serait alors plus près de la borne pourrait capter les informations émises par la borne à destination du transpondeur lointain, ce qui n'apporte pas les garanties souhaitées en terme de sécurité. De plus, une borne "pirate" peut alors être interposée entre la borne autorisée et le transpondeur et capter alors les informations du transpondeur, ce qui n'est pas non plus souhaitable.

Un autre problème qui se pose est que, dans les systèmes classiques, un transpondeur dans une relation de couplage relativement lointain avec une borne recevra moins d'énergie qu'un transpondeur placé plus près de la borne. Dans un tel cas, le fonctionnement du système risque d'en souffrir.

La présente invention vise à proposer une solution au besoin de fonctionnement en portée relativement lointaine des systèmes à transpondeur électromagnétique.

La présente invention vise, en particulier, à proposer une solution qui permette de dédier structurellement un transpondeur et/ou une borne à un fonctionnement en portée relativement lointaine.

Plus généralement, l'invention vise à proposer une solution qui permette de dédier structurellement un transpondeur et/ou une borne à un fonctionnement dans une relation où les antennes sont à une distance supérieure à une valeur prédéterminée l'une de l'autre.

L'invention vise également à proposer une solution qui soit particulièrement simple à mettre en oeuvre pour le fabricant et qui soit fiable dans le temps.

Pour atteindre ces objets, la présente invention prévoit un transpondeur électromagnétique du type comprenant un circuit oscillant parallèle propre à être excité par un circuit oscillant série d'une borne de lecture-écriture lorsque le transpondeur entre dans le champ de la borne, les composants du circuit oscillant du transpondeur étant dimensionnés pour que le coefficient de couplage entre les circuits oscillants respectifs de la borne et du transpondeur diminue rapidement quand la distance séparant le transpondeur de la borne devient inférieure à une valeur prédéterminée.

Selon un mode de réalisation de la présente invention, ladite valeur est de 5 cm.

Selon un mode de réalisation de la présente invention, une inductance du circuit oscillant parallèle est minimisée.

Selon un mode de réalisation de la présente invention, l'inductance L2 du circuit oscillant parallèle est choisie pour que la relation suivante soit respectée :

$$\text{kopt} = \sqrt{\frac{R1L2}{R2L1}},$$

où kopt représente le coefficient de couplage fournissant une tension maximale aux bornes du circuit oscillant parallèle, où R1 représente la résistance série du circuit oscillant série, où R2 représente la résistance équivalente du transpondeur ramenée en parallèle sur l'inductance L2, et où L1 représente l'inductance du circuit oscillant série.

Selon un mode de réalisation de la présente invention, les composants du circuit oscillant du transpondeur sont dimensionnés à partir d'un point de fonctionnement à distance médiane d'une plage de fonctionnement souhaitée, choisi pour correspondre à un coefficient de couplage le plus proche possible d'un coefficient de couplage optimal respectant la relation suivante :

$$\text{V2max(kopt)} = \sqrt{\frac{R2}{R1}} \, \frac{Vg}{2},$$

où V2max représente la tension aux bornes du circuit oscillant parallèle pour le couplage optimal entre les circuits oscillants, où R1 représente la résistance série du circuit oscillant série, où R2 représente la résistance équivalente du transpondeur ramenée en parallèle sur son circuit oscillant, et où Vg représente la tension d'excitation du circuit oscillant série.

Selon un mode de réalisation de la présente invention, le nombre de spires de l'inductance du circuit oscillant du transpondeur est inférieur à 3.

Selon un mode de réalisation de la présente invention, les valeurs respectives du condensateur et de l'inductance du circuit oscillant parallèle sont comprises entre 20 et 500 pf et entre 0,1 et 10 µH.

L'invention prévoit également une borne de génération d'un champ électromagnétique propre à coopérer avec au moins un transpondeur lorsque ce dernier entre dans ce champ, comprenant un circuit oscillant série de génération du champ électromagnétique, ce circuit oscillant série étant dimensionné pour que le coefficient de couplage entre les circuits oscillants respectifs de la borne et du transpondeur diminue fortement quand la distance séparant le transpondeur de la borne devient inférieure à une valeur prédéterminée.

Selon un mode de réalisation de la présente invention, les composants du circuit oscillant de la borne sont dimensionnés pour respecter les conditions de fonctionnement du transpondeur.

Selon un mode de réalisation de la présente invention, l'inductance du circuit oscillant série de la borne comporte entre 3 et 15 spires.

L'invention concerne en outre un système de transmission électromagnétique sans contact entre une borne et un transpondeur.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 décrite précédemment représente, de façon très schématique, une borne de lecture-écriture et un transpondeur électromagnétique du type auxquels s'applique la présente invention ; et
la figure 2 représente un exemple d'évolution de la tension aux bornes du circuit oscillant d'un transpondeur en fonction de la distance le séparant d'une borne.

Pour des raisons de clarté, seuls les éléments nécessaires à la compréhension de l'invention ont été représentés aux figures et seront décrits par la suite. En particulier, les circuits de commande et d'exploitation des circuits oscillants du transpondeur et de la borne n'ont pas été détaillés et ne font pas l'objet de la présente invention.

Une caractéristique de la présente invention est de prévoir un dimensionnement particulier du circuit oscillant d'un transpondeur électromagnétique pour que celui-ci soit structurellement dédié à un fonctionnement en portée relativement lointaine, c'est-à-dire à plus de 5 cm d'une borne de lecture-écriture et, de préférence, entre 5 cm et la limite de portée du système. Cette portée est fonction de la consommation du transpondeur et est, par exemple, de l'ordre de 20 à 30 cm pour des transpondeurs de type étiquette à faible consommation et de l'ordre de 10 à 20 cm pour des transpondeurs équipés de micro-contrôleurs.

La notion de distance à laquelle fait référence la présente invention est la distance séparant les antennes respectives L1, L2 (figure 1) d'un transpondeur 10 et d'une borne 1.

La présente invention propose donc de placer, de préférence par les dimensionnements respectifs des circuits oscillants du transpondeur et de la borne, la plage de fonctionnement du système pour garantir la portée souhaitée à la fréquence d'accord, c'est-à-dire lorsque les fréquences de résonance des circuits oscillants correspondent sensiblement à la fréquence de la porteuse de téléalimentation (par exemple, 13,56 MHz).

La figure 2 représente l'évolution de la tension V2 aux bornes 11, 12 du transpondeur en fonction de la distance d séparant le transpondeur d'une borne de lecture-écriture.

La courbe de la figure 2 peut également être considérée comme représentant l'évolution de la tension V2 en fonction du coefficient de couplage k entre les circuits oscillants du transpondeur et de la borne. En effet, le couplage entre les circuits oscillants est fonction de la distance qui sépare les antennes. Plus précisément, le coefficient de couplage k est, en première approximation, proportionnel à 1-d. Par conséquent, dans la description qui suit, on fera référence soit à la distance soit au coefficient de couplage comme abscisse de la caractéristique de la figure 2. L'axe des abscisses représente une distance d croissante vers la droite de la figure et un coefficient de couplage k croissant vers la gauche de la figure.

La tension V2 présente un maximum V2max pour une valeur optimale du coefficient de couplage kopt. Cette valeur correspond à la plus petite valeur de couplage entre les deux antennes pour laquelle la tension V2 est maximale lorsque la fréquence correspond à la fréquence de résonance des circuits oscillants. Cette valeur correspond, selon l'invention, à une distance relativement importante. Pour une fréquence et un dimensionnement donnés fixant les conditions de fonctionnement, la tension V2 diminue de part et d'autre de la position de couplage optimal.

La courbe présente un point d'inflexion pour une valeur de couplage de $kopt\sqrt{3}$, c'est-à-dire pour une distance inférieure à la position de couplage optimal. Côté distances inférieures, la courbe tend vers une asymptote à une position de tension minimale V2min. Côté distances supérieures à la position de couplage optimal, la décroissance de la tension V2 est plus prononcée. En outre, on constate que le niveau de tension du point d'inflexion à $kopt\sqrt{3}$ se retrouve, symétriquement par rapport à la position de couplage optimal, pour une valeur $kopt \div \sqrt{3}$.

La relation qui lie le coefficient de couplage optimal kopt et les composants des circuits oscillants est la suivante :

$$kopt = \sqrt{\frac{R1L2}{R2L1}}.$$

Un coefficient de couplage k égal à l'unité correspond à la valeur limite théorique. Par conséquent, le coefficient kopt est, en pratique, toujours inférieur à 1.

Plus généralement, le coefficient de couplage k est donné par la formule k=m/$\sqrt{L1L2}$, où m représente la mutuelle inductance entre les circuits oscillants. Cette mutuelle inductance dépend, essentiellement, de la géométrie des antennes ou inductances L1 et L2.

Une caractéristique de la présente invention est de fixer, au moyen des valeurs respectives des composants des circuits oscillants, une plage de fonctionnement en distance telle que, en s'écartant de cette plage de fonctionnement, le coefficient de couplage entre les circuits oscillants diminue fortement.

Ainsi, pour un fonctionnement lointain, on dimensionnera les circuits oscillants pour que le point de couplage optimal kopt soit le plus possible vers la droite de la figure, c'est-à-dire pour des distances importantes. On dispose, par le dimensionnement des circuits oscillants, de deux possibilités pour placer la plage de fonctionnement réel en termes de couplage et de distance.

Selon la présente invention, on choisira que le point de distance nulle corresponde, tout en étant le plus loin possible du point de couplage optimal, à un coefficient de couplage supérieur au coefficient optimal et adapté à la tension minimale requise V2tr pour le fonctionnement correct du transpondeur. Cela revient à placer un point de fonctionnement à distance nulle, à gauche de la position de couplage optimal sur la figure 2. Ce point correspond à un couplage réel maximal kmax. Ce coefficient kmax dépend des géométries respectives des antennes L1 et L2 et est, bien entendu, compris entre 0 et 1. En pratique, on notera que le coefficient de couplage réel maximal kmax entre deux circuits oscillants n'excède généralement pas 0,7.

De préférence, on positionne la plage de fonctionnement sur la caractéristique de la figure 2 de sorte que, quand la distance d diminue, le coefficient de couplage diminue fortement. La meilleure solution est que le point de couplage optimal corresponde approximativement au centre de la plage de fonctionnement en distance souhaitée. Ainsi, on obtient une énergie de téléalimentation la plus régulière possible, car la plage de fonctionnement comprend le "ventre" de la caractéristique. Un autre avantage est alors que la diminution de distance se situe dans une partie de forte pente. Ainsi, dès que la distance s'écarte de la plage de fonctionnement, le coefficient de couplage diminue fortement de sorte que le transpondeur n'est alors plus alimenté. De préférence, le point de couplage réel maximal sera choisi de façon à ce que la tension V2 correspondante soit loin de la position kopt et corresponde à une distance inférieure, et pour que la tension minimale V2tr de fonctionnement du transpondeur soit comprise entre la tension correspondant au point d'inflexion et la tension V2max.

De préférence, on choisit une valeur d'inductance L2 du transpondeur 10 la plus faible possible, tout en restant compatible avec une intégration du condensateur C2 pour la fréquence de résonance souhaitée (par exemple, 13,56 MHz).

On notera que, alors que dans les systèmes classiques on cherche à diminuer la valeur de l'inductance L2 du transpondeur pour diminuer la portée du système, l'invention prévoit, à l'inverse, de diminuer cette inductance pour un fonctionnement dédié en couplage lointain.

Le fait de rechercher une inductance L2 la plus faible possible est compatible avec la recherche d'une tension de téléalimentation la plus faible possible pour la distance nulle. De la même façon, on cherchera à maximiser la valeur de la résistance équivalente R2 pour toujours diminuer le coefficient de couplage lointain afin que le couplage optimal soit à une distance la plus loin possible (ce qui revient à dire que l'on souhaite une valeur faible). Un avantage d'une augmentation de la résistance R2 est que cela diminue la consommation. On tiendra cependant compte du besoin de téléalimentation du transpondeur et de la dissipation dans celui-ci.

On notera que la recherche d'une inductance L2 la plus petite possible correspond à une diminution du nombre de tours de cette inductance (par exemple, du nombre de tours conducteurs de l'antenne L2 réalisée sur la carte à puce formant le transpondeur). Cette diminution du nombre de spires diminue la résistance parasite de l'inductance L2. Toutefois, la diminution de la résistance parasite série correspond, ramenée en parallèle sur le circuit oscillant, à une augmentation de la résistance R2. Cela va donc dans le bon sens pour augmenter la résistance R2.

Un avantage d'augmenter la valeur du condensateur C2 pour maintenir la fréquence de résonance malgré la faible inductance L2 est que cela augmente le facteur de qualité du transpondeur. En effet, le facteur de qualité d'un circuit résonant parallèle est égal à $\omega$R2C2, où $\omega$ représente la pulsation du circuit oscillant. Or, plus le facteur de qualité est élevé, plus la portée est grande.

Selon un mode de mise en oeuvre préféré de l'invention, la détermination des valeurs respectives des différents composants s'effectue de la manière suivante.

Tout d'abord, l'application et les besoins énergétiques du transpondeur fixent la tension V2tr qui doit être obtenue par téléalimentation. Pour une tension d'excitation donnée Vg du circuit oscillant de la borne, la tension V2 récupérée par le transpondeur est fonction des valeurs respectives de la résistance série R1 de la borne et de la résistance équivalente R2 du transpondeur en parallèle sur son circuit oscillant. La valeur de la résistance R2 peut être évaluée à partir des constituants (microprocesseur, régulateur, etc.) du transpondeur qui fixent le besoin de téléalimentation qui doit être préservé.

Au point de couplage optimal théorique kopt, la tension V2max est donnée par la relation suivante :

$$V2max(kopt) = \sqrt{\frac{R2}{R1}} \frac{Vg}{2}.$$

Plus généralement, la relation qui lie la tension V2 au coefficient de couplage k peut s'écrire :

$$V2(k) = \frac{kR2Vg\sqrt{\frac{L1}{L2}}}{R1 + k^2 \frac{L1}{L2}R2}.$$

Après avoir déterminé la tension V2 qu'il faut obtenir aux bornes du condensateur C2, on dimensionne l'inductance L2 à la valeur la plus faible possible.

Puis, on détermine le condensateur C2 du circuit oscillant en fonction de la fréquence de résonance souhaitée, à partir de la relation :

$$C2 = \frac{1}{L2\omega^2}.$$

On adapte le cas échéant les valeurs pour préserver l'intégration du condensateur C2.

Connaissant l'inductance L2, on peut déterminer la valeur qui doit être donnée à l'inductance de l'antenne L1 de la borne afin d'optimiser le système. La relation liant ces deux valeurs pour que la courbe de la figure 2 soit respectée est, à l'accord, c'est-à-dire pour un dimensionnement fixant la fréquence de résonance à la fréquence de la porteuse de téléalimentation :

$$L1 = \frac{R1L2}{R2k^2}.$$

De préférence, la valeur de l'inductance L1 est choisie la plus forte possible, c'est-à-dire en maximisant son nombre de spires. Ainsi, selon l'invention, le nombre de spires de la borne est relativement élevé, de préférence compris entre 3 et 15, et le nombre de spires du transpondeur est relativement faible, de préférence, inférieur à 3. Ce choix est motivé par le fait que, pour maximiser la résistance R2, la résistance parasite série de l'inductance L2 doit être la plus faible possible, et on favorise donc un faible nombre de spires avec des conducteurs de section relativement importante. Ce choix doit être compatible avec l'intégration du condensateur C2. On notera que, côté borne, le nombre de spires de la borne doit rester compatible avec une valeur de capacité C1 qui soit suffisante pour être réalisable.

De préférence, la borne sera pourvue d'une résistance R1 la plus faible possible pour obtenir un couplage optimal à une distance la plus grande possible.

A titre d'exemple particulier de réalisation, pour une fréquence de porteuse de 13,56 MHz et pour une valeur de 370 nanohenrys pour l'inductance L2, on utilise un condensateur C2 de capacité de 372 picofarads. Si le microprocesseur du transpondeur requiert une tension minimale de l'ordre de 4 volts pour fonctionner, on choisira une tension V2 d'environ 5 volts pour une position de distance médiane de la plage de fonctionnement. Les fourchettes de valeur préférées sont, par exemple, une inductance L2 de valeur donnée comprise entre 0,1 et 10 µH, et un condensateur C2 de valeur donnée comprise entre 20 et 500 pf.

Dans une application à un transpondeur de type étiquette (tag) à faible consommation, le nombre de spires est, de préférence, égal à 1. Dans une application à un transpondeur de type carte à puce (équipé d'un microcontrôleur) de consommation plus élevée, le nombre de spires est, de préférence, égal à 2.

On notera que le fait de fixer structurellement les valeurs respectives des composants des circuits oscillants de la borne et du transpondeur n'est pas gênant. En effet, dans la plupart des applications, un type de transpondeur donné est dédié à une borne. En particulier, les caractéristiques de fonctionnement des systèmes à transpondeur électromagnétique font généralement l'objet de normes. Par conséquent, il n'est pas gênant de fixer de façon définitive les relations entre les circuits oscillants d'une borne et d'un transpondeur. A l'inverse, cela constitue un avantage de l'invention car on évite ainsi les risques d'intervention non autorisée sur le transpondeur en vue de le pirater.

De préférence, la rétromodulation par le transpondeur sera effectuée de façon capacitive, c'est-à-dire au moyen d'un interrupteur électronique modifiant la capacité du circuit oscillant plutôt que la résistance. Un avantage est alors que l'on atténue moins la téléalimentation.

Un avantage de la présente invention est qu'elle permet la réalisation de transpondeurs et de systèmes dédiés à un fonctionnement en portée lointaine.

Un autre avantage de la présente invention est qu'elle répond aux exigences de sécurité les plus sévères pour éviter le piratage d'un transpondeur.

Bien entendu, la présente invention est susceptible de diverses variantes et modifications qui apparaîtront à l'homme de l'art. En particulier, le choix des valeurs des composants des circuits oscillants est à la portée de l'homme de métier à partir des indications fonctionnelles et des relations données ci-dessus, en fonction de l'application et, en particulier, de la fréquence de la porteuse sur laquelle doivent être accordés ces circuits oscillants. De plus, on notera que l'invention n'altère pas les fonctionnements respectifs du transpondeur et de la borne pour ce qui est des circuits numériques de traitement.

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellite, etc.) de cartes à puce sans contact (par exemple, les cartes d'identification pour contrôle d'accès, les cartes porte-monnaie électronique, les cartes de stockage d'informations sur le processeur de la carte, les cartes de fidélité de consommateurs, les cartes de télévision à péage, etc.) ainsi que de telles cartes à puce.

## Revendications

1. Transpondeur électromagnétique (10) du type comprenant un circuit oscillant parallèle (L2, C2) propre à être excité par un circuit oscillant série (R1, L1, C1) d'une borne (1) de lecture-écriture lorsque le transpondeur entre dans le champ de la borne, caractérisé en ce que les composants du circuit oscillant du transpondeur sont dimensionnés pour que le coefficient de couplage (k) entre les circuits oscillants respectifs de la borne et du transpondeur diminue rapidement quand la distance (d) séparant le transpondeur de la borne devient inférieure à une valeur prédéterminée.

2. Transpondeur électromagnétique selon la revendication 1, caractérisé en ce que ladite valeur est de 5 cm.

3. Transpondeur électromagnétique (10) selon la revendication 1 ou 2, caractérisé en ce qu'une inductance (L2) du circuit oscillant parallèle est minimisée.

4. Transpondeur électromagnétique (10) selon l'une quelconque des revendications 1 à 3, caractérisé en ce que l'inductance L2 du circuit oscillant parallèle (L2, C2) est choisie pour que la relation suivante soit respectée :

$$kopt = \sqrt{\frac{R1L2}{R2L1}},$$

où kopt représente le coefficient de couplage fournissant une tension maximale aux bornes du circuit oscillant parallèle, où R1 représente la résistance série du circuit oscillant série (L1, C1, R1), où R2 représente la résistance équivalente du transpondeur ramenée en parallèle sur l'inductance L2, et où L1 représente l'inductance du circuit oscillant série.

5. Transpondeur électromagnétique (10) selon l'une quelconque des revendications 1 à 4, caractérisé en ce que les composants de son circuit oscillant (L2, C2) sont dimensionnés à partir d'un point de fonctionnement à distance médiane d'une plage de fonctionnement souhaitée, choisi pour correspondre à un coefficient de couplage (k) le plus proche possible d'un coefficient de couplage optimal (kopt) respectant la relation suivante :

$$V2max(kopt) = \sqrt{\frac{R2}{R1}} \; \frac{Vg}{2},$$

où V2max représente la tension aux bornes du circuit oscillant parallèle pour le couplage optimal entre les circuits oscillants, où R1 représente la résistance série du circuit oscillant série (L1, C1, R1), où R2 représente la résistance équivalente du transpondeur ramenée en parallèle sur son circuit oscillant, et où Vg représente la tension d'excitation du circuit oscillant série.

6. Transpondeur électromagnétique (10) selon l'une quelconque des revendications 1 à 5, caractérisé en ce que le nombre de spires de l'inductance (L2) de son circuit oscillant est inférieur à 3.

7. Transpondeur électromagnétique (10) selon l'une quelconque des revendications 1 à 6, caractérisé en ce que les valeurs respectives du condensateur (C2) et de l'inductance (L2) de son circuit oscillant parallèle sont comprises entre 20 et 500 pf et entre 0,1 et 10 μH.

8. Borne (1) de génération d'un champ électromagnétique propre à coopérer avec au moins un transpondeur (10) lorsque ce dernier entre dans ce champ, comprenant un circuit oscillant série (L1, C1) de génération du champ électromagnétique, caractérisée en ce que ce circuit oscillant série est dimensionné pour que le coefficient (k) de couplage entre les circuits oscillants respectifs de la borne et du transpondeur diminue fortement quand la distance (d) séparant le transpondeur de la borne devient inférieure à une valeur prédéterminée.

9. Borne (1) selon la revendication 8, caractérisée en ce que les composants de son circuit oscillant (R1, C1, L1) sont dimensionnés pour respecter les conditions de fonctionnement d'un transpondeur (10) conforme à l'une quelconque des revendications 1 à 6.

10. Borne (1) selon la revendication 9, caractérisée en ce que l'inductance (L1) de son circuit oscillant série (L1, C1, R1) comporte entre 3 et 15 spires.

11. Système de transmission électromagnétique sans contact entre une borne (1) et un transpondeur (10), caractérisé en ce que le transpondeur est conforme à l'une quelconque des revendications 1 à 7, la borne étant conforme à l'une quelconque des revendications 8 à 10.

Fig 1

Fig 2

**Office européen des brevets**

**RAPPORT DE RECHERCHE EUROPEENNE**

Numéro de la demande

EP 00 41 0077

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 782 308 A (TROBEC FRANC ET AL) 1 novembre 1988 (1988-11-01) | 1,3,8-11 | G06K19/07 |
| Y | * colonne 3, ligne 42-49; figure 1 * --- | 6,7 | |
| Y | FR 2 724 477 A (GEMPLUS CARD INT) 15 mars 1996 (1996-03-15) * page 6, ligne 1-8; figure 1 * --- | 6 | |
| Y | WO 99 33017 A (HADFIELD GEORGE ;ADVANCED TECHNOLOGY COMMUNICAT (GB)) 1 juillet 1999 (1999-07-01) * page 6, ligne 16 - page 7, ligne 5; figure 2 * --- | 7 | |
| A | DE 44 44 984 C (SIEMENS AG) 14 décembre 1995 (1995-12-14) * le document en entier * --- | 1-11 | |
| A | EP 0 267 009 A (MARS INC) 11 mai 1988 (1988-05-11) * page 2, ligne 48-57; figure 1 * ----- | 1-11 | **DOMAINES TECHNIQUES RECHERCHES** (Int.Cl.7) G06K |

Le présent rapport a été établi pour toutes les revendications

| Lieu de la recherche | Date d'achèvement de la recherche | Examinateur |
|---|---|---|
| LA HAYE | 19 octobre 2000 | Schauler, M |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 00 41 0077

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

19-10-2000

| Document brevet cité au rapport de recherche | | Date de publication | Membre(s) de la famille de brevet(s) | | Date de publication |
|---|---|---|---|---|---|
| US 4782308 | A | 01-11-1988 | YU | 31487 A | 31-08-1989 |
| | | | YU | 34086 A | 31-12-1989 |
| | | | DE | 3707173 A | 10-09-1987 |
| FR 2724477 | A | 15-03-1996 | DE | 69505481 D | 26-11-1998 |
| | | | DE | 69505481 T | 18-05-2000 |
| | | | EP | 0709804 A | 01-05-1996 |
| | | | JP | 8090971 A | 09-04-1996 |
| | | | US | 5767503 A | 16-06-1998 |
| WO 9933017 | A | 01-07-1999 | AU | 1770999 A | 12-07-1999 |
| DE 4444984 | C | 14-12-1995 | WO | 9618969 A | 20-06-1996 |
| EP 0267009 | A | 11-05-1988 | GB | 2197107 A | 11-05-1988 |
| | | | AT | 77163 T | 15-06-1992 |
| | | | DE | 3779723 A | 16-07-1992 |
| | | | DE | 3779723 T | 10-12-1992 |
| | | | ES | 2032451 T | 16-02-1993 |
| | | | WO | 8803684 A | 19-05-1988 |
| | | | US | 5013898 A | 07-05-1991 |

EPO FORM P0460

Pour tout renseignement concernant cette annexe : voir Journal Officiel de l'Office européen des brevets, No.12/82